# EUROPEAN PATENT SPECIFICATION

(11) **EP 4 253 237 B1**
(45) Date of publication and mention of the grant of the patent: **04.06.2025**
(21) Application number: 23163115.1
(22) Date of filing: 21.03.2023
(51) Int. Cl.: B64D 11/06, B60N 3/00, E05D 1/02

(54) **INTEGRALLY FORMED TRAY TABLE WITH FLEXURAL HINGES**
INTEGRAL GEFORMTER SERVIERTISCH MIT FESTKÖRPERGELENKE
TABLE À PLATEAUX FORMÉE D'UN SEUL TENANT AVEC CHARNIÈRES FLEXIBLES

(30) Priority: 01.04.2022 IN 202241019969; 02.02.2023 US 202318104922
(43) Date of publication of application: 04.10.2023
(73) Proprietor: B/E Aerospace, Inc., Winston-Salem, NC 27105 (US)
(72) Inventor: CARANDANG, Daniel Emmanuel, 1200 Makati City (PH); CAMPOMANES, Jovennnie V., 6100 Bacolod City (PH); MOHANAM, Rajesh, 500089 Hyderabad (IN); SUMINISTRADO, Jenesis B., 4024 Binan (PH)
(74) Representative: Dehns

(56) References cited:
- EP-B1- 3 269 589
- WO-A1-2013/142235
- DE-A1- 102009 052 593
- DE-A1- 3 334 314
- US-A- 5 876 092
- US-A1- 2020 039 409

## Description

### RELATED APPLICATION

This application claims the benefit of priority of Indian Patent Application Number 202241019969 filed April 1, 2022 entitled INTEGRALLY FORMED TRAY TABLE WITH FLEXURAL HINGES.

### BACKGROUND

Conventional aircraft tray table designs (e.g., installed in economy class seating) include multiple separate sub-assemblies. One example is a conventional tray table that splits into two sections, with a conventional hinge at the intersection of the two sections. An improved tray table that reduces components, materials, weight and cost, while also increasing the ease of installation, removal, rework, and customer experience is desirable. DE 10 2009 052593 relates to a vehicle seat with a table top. US 2020/039409 relates to tray table arms. DE 33 34 314 relates to a film hinge.

### SUMMARY

A tray table for an aircraft is disclosed in accordance with claim 1.

A method of 3D printing the tray table is also disclosed in accordance with claim 9. The method may be performed by stereolithography (SLA).

It is to be understood that both the foregoing general description and the following detailed description are exemplary and explanatory only and are not necessarily restrictive of the invention as claimed. The accompanying drawings, which are incorporated in and constitute a part of the specification, illustrate embodiments of the invention and together with the general description, serve to explain the principles of the invention.

### BRIEF DESCRIPTION OF DRAWINGS

The numerous advantages of the disclosure may be better understood by those skilled in the art by reference to the accompanying figures in which:
FIG. 1 is a perspective view illustrating a tray table for an aircraft in a stowed position, in accordance with one or more embodiments of the present disclosure;
FIG. 2 is a perspective view illustrating a tray table for an aircraft in a deployed position, in accordance with one or more embodiments of the present disclosure;
FIG. 3 is a side view illustrating a tray table for an aircraft in a stowed position, in accordance with one or more embodiments of the present disclosure;
FIGS. 4A-4B are detailed views of FIG. 3 illustrating flexural hinges showing the configuration of flexural members in a stowed position of a tray table, in accordance with one or more embodiments of the present disclosure;
FIG. 5 is a side view illustrating a tray table for an aircraft in a deployed position, in accordance with one or more embodiments of the present disclosure;
FIGS. 6A-6B are detailed views of FIG. 5 illustrating flexural hinges showing the configuration of flexural members in a deployed position of a tray table, in accordance with one or more embodiments of the present disclosure; and
FIG. 7 is a flowchart illustrating a method of manufacturing a tray table for an aircraft, in accordance with one or more embodiments of the present disclosure.

### DETAILED DESCRIPTION

Before explaining at least one embodiment of the inventive concepts disclosed herein in detail, it is to be understood that the inventive concepts are not limited in their application to the details of construction and the arrangement of the components or steps or methodologies set forth in the following description or illustrated in the drawings. In the following detailed description of embodiments of the present disclosure, numerous specific details are set forth in order to provide a more thorough understanding of the inventive concepts. However, it will be apparent to one of ordinary skill in the art having the benefit of the present disclosure that the inventive concepts disclosed herein may be practiced without these specific details. In other instances, well-known features may not be described in detail to avoid unnecessarily complicating the present disclosure. The inventive concepts disclosed herein are capable of other embodiments or of being practiced or carried out in various ways. Also, it is to be understood that the phraseology and terminology employed herein is for the purpose of description and should not be regarded as limiting.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only, and should not be construed to limit the inventive concepts disclosed herein in any way unless expressly stated to the contrary. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present). In addition, use of the "a" or "an" are employed to describe elements and components of embodiments of the present inventive concepts. This is done merely for convenience and to give a general sense of the inventive concepts, and "a" and "an" are intended to include one or at least one and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment of the inventive concepts disclosed herein. The appearances of the phrase "in some embodiments" in various places in the specification are not necessarily all referring to the same embodiment, and embodiments of the inventive concepts disclosed may include one or more of the features expressly described or inherently present herein, or any combination or sub-combination of two or more such features, along with any other features which may not necessarily be expressly described or inherently present in the present disclosure.

Embodiments of the present disclosure are directed to a tray table and a method of manufacturing the same. The tray table **is** a single-structured compliant mechanism employing flexural hinges. The flexural hinges are configured to provide motion (e.g., a pivot) between two adjacent portions/members by elastic deformation. The flexural hinges are folding points when deploying the tray table (when in use) or when stowing the tray table. The tray table is a single, unitary structure, and the components of the tray table may be manufactured using the same material.

The present tray table and method provide several advantages. Deployment of the tray table may require less resultant force during stowage & deployment compared to a conventional tray table that comprises several separate parts. Since the present tray table has fewer parts than a conventional tray table, the present tray table may reduce weight (which may add up to significant weight savings on an aircraft when scaled across hundreds of passenger seats). The present tray table may be easier to manufacture using modern additive manufacturing (e.g., 3D printing). In particular, stereolithography (SLA) may enable the manufacture of precise and quality finished products in a short time. The combination of advantages described above reduces costs and may lead to other uses for compliant mechanisms (e.g., other uses that are not immediately intuitive).

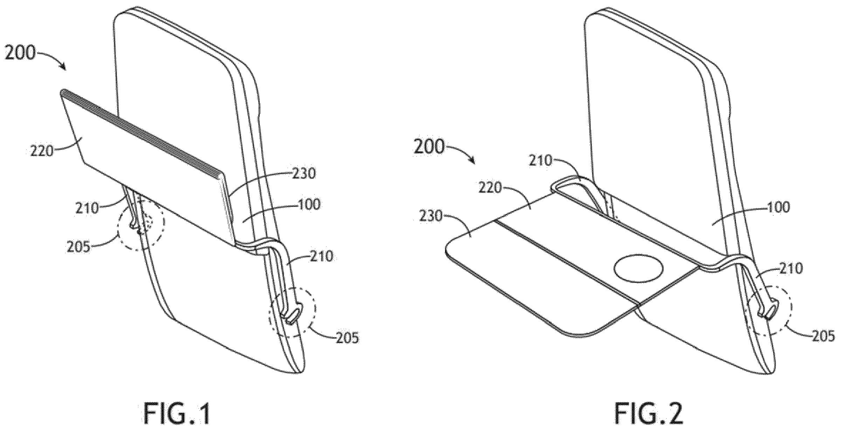

FIGS. 1-2 are perspective views respectively illustrating a tray table 200 for an aircraft in a stowed position and a deployed position, in accordance with one or more embodiments of the present disclosure. The tray table 200 comprises a base portion 210, a first surface portion 220, and a second surface portion 230. The tray table 200 is configured to be connected to an aircraft seat frame 100 via a hinge 205.

The hinge 205 is configured to connect the base portion 210 to the aircraft seat frame 100. The hinge 205 is configured to pivot the base portion 210 with respect to the aircraft seat frame 100. The hinge 205 may include, for example, a bolt mechanism that rotates within a void or cavity and that is configured to secure or attach the base portion 210 to the frame 100. In some embodiments, the base portion 210 may comprise a "U" shape with a straight section, and two curved sections connecting the straight section to the frame 100.

The first surface portion 220 and second surface portion 230 are configured to be flat surfaces (e.g., for holding food, water, a book, etc.) when a user deploys the tray table 200. The first surface portion 220 and the second surface portion 230 are configured to fold in toward the aircraft seat frame 100 to stow the tray table 200, and to fold out away from the aircraft seat frame 100 to deploy the tray table 200.

The first surface portion 220 and the second surface portion 230 may comprise a substantially rectangular cuboid shape having fillet edges or rounded or chamfered corners (although the portions 220, 230 are not limited thereto). In some embodiments, the rectangular-cuboid shape may have a length at least 10 times longer than the thickness and a width at least 10 times longer than the thickness.

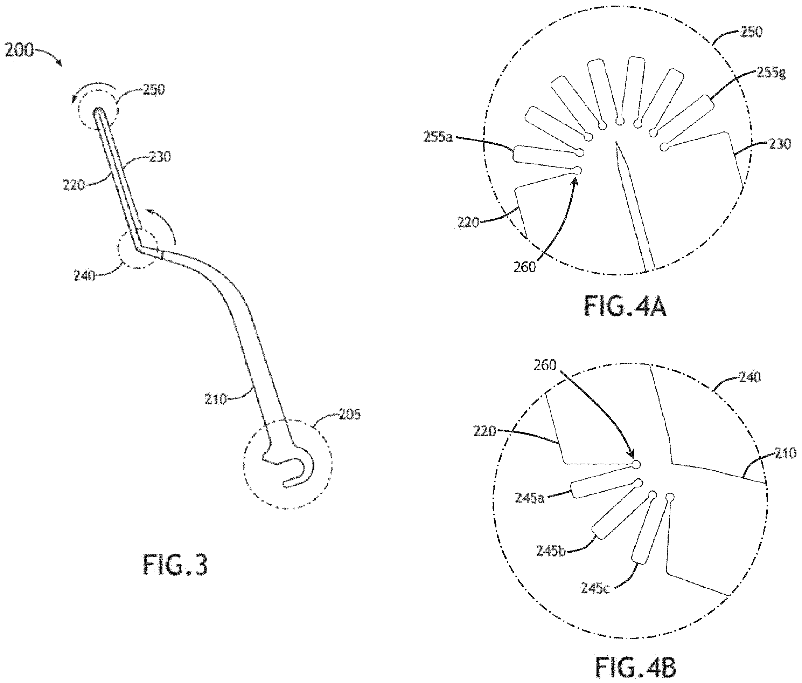

FIG. 3 is a side view illustrating the tray table 200 in the stowed position, in accordance with one or more embodiments of the present disclosure. The tray table 200 includes flexural hinges 240 and 250. To begin deploying the tray table 100, a user may rotate the tray table 200 away from the frame 100.

FIGS. 4A-4B are side views respectively illustrating the flexural hinges 240, 250 showing the configuration of flexural members 245a-c, 255a-g in the stowed position of the tray table 200, in accordance with one or more embodiments of the present disclosure. As shown, the flexural members 245a-c, 255a-g have gaps in between each member 245a-c, 255a-g when the table 200 is in the stowed position. Also as shown, substantially circular material voids 260 may be formed proximal the attached ends of each flexural member 245a-c, 255a-g. In some embodiments, each flexural member 245a-c, 255a-g may taper slightly toward its detached end. The flexural members 245a-c are pliable to enable the flexural hinge 240 to pivot, and the flexural members 255a-g are pliable to enable the second flexural hinge to pivot.

Each of the flexural members 245a-c, 255a-g may have a substantially rectangular-cuboid shape (e.g., a bar shape). In some embodiments, the substantially rectangular-cuboid shape may have a length at least 10 times longer than the width, and a length at least 10 times longer than the thickness. Although three members 245a-c and seven members 255a-g are shown, it is contemplated that the members 245a-c, 255a-g may comprise any number of members.

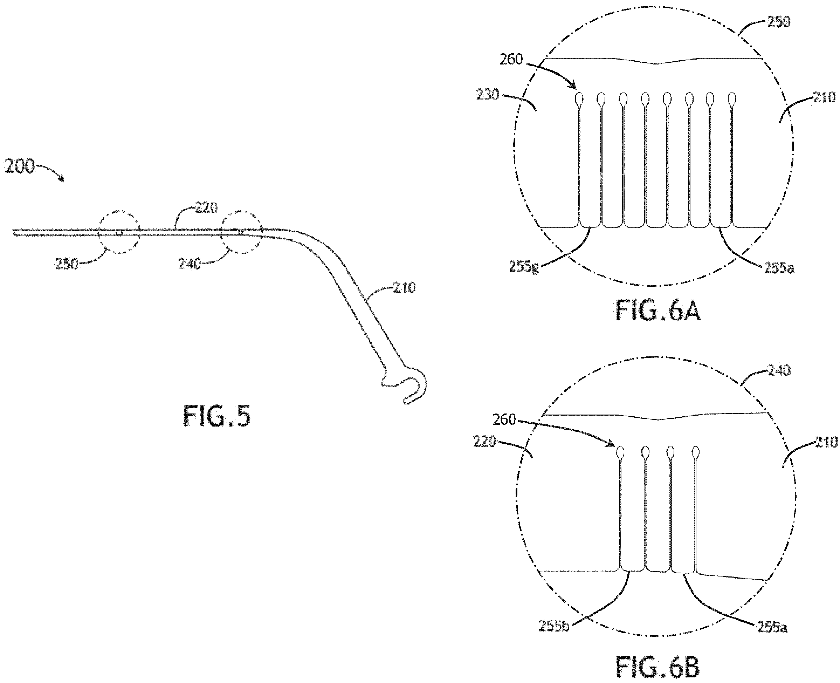

FIG. 5 is a side view illustrating the tray table 200 in the deployed position, in accordance with one or more embodiments of the present disclosure. In the deployed position, a user may place items (i.e., food tray, laptop, phone, beverage, etc.) on the flat surface portions 220, 230 without the risk of spilling or dropping.

FIGS. 6A-6B are side views respectively illustrating the flexural hinges 240, 250 showing the configuration of flexural members 245a-c, 255a-g in the deployed position of the tray table 200, in accordance with one or more embodiments of the present disclosure. As shown, the flexural members 245a-c, 255a-g are substantially adjacent to each other when the table 200 is in the deployed position, no (zero) gaps are between each member 245a-c, 255a-g, and the substantially circular voids 260 may deform slightly (e.g., elongate). In this way, the sidewalls of each member 245a-c, 255a-g may exert pressure on each other, which may provide stability (sturdiness) to the tray table 200.

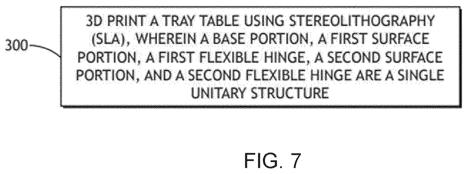

FIG. 7 is a flowchart illustrating a method of manufacturing a tray table for an aircraft, in accordance with one or more embodiments of the present disclosure. At 300, the method comprises 3D printing a tray table using stereolithography (SLA) or other additive manufacturing process. The tray table may be printed so that a base portion, a first surface portion, a first flexible hinge, a second surface portion, and a second flexible hinge are a single unitary structure. The tray table may comprise a single material, for example an engineering resin such as nylon polyamide (PA), however other materials are also contemplated herein.

It is noted herein that the term "length" may be construed as the largest dimension of a given 3-dimensional structure or feature. The term "width" may be construed as the second largest dimension of a given 3-dimensional structure or feature. The term "thickness" may be construed as a smallest dimension of a given 3-dimensional structure or feature. A "major surface" may be construed as a surface defined by the two largest dimensions of a given structure or feature, which in the case of a structure or feature having a circular surface, may be defined by the radius of the circle.

It is believed that the present disclosure and many of its attendant advantages will be understood by the foregoing description, and it will be apparent that various changes may be made in the form, construction, and arrangement of the components without departing from the disclosed subject matter or without sacrificing all of its material advantages. The form described is merely explanatory, and it is the intention of the following claims to encompass and include such changes. Furthermore, it is to be understood that the invention is defined by the appended claims.

## Claims

1. A tray table (200) for an aircraft, comprising:
a base portion (210) attachable to an aircraft seat frame via a hinge, the hinge operative to pivot the base portion relative to the aircraft seat frame;
a first tray table portion;
a first flexural hinge (240) connecting the first tray table portion to the base portion, the first flexural hinge operative to pivot the first tray table portion relative to the base portion;
a second tray table portion; and
a second flexural hinge (250) connecting the second tray table portion to the first tray table portion, the second flexural hinge operative to pivot the second tray table portion relative to the first tray table portion;
wherein the first flexural hinge (240) comprises first flexural members (245a-c) which are pliable to enable the first flexural hinge to pivot;
wherein the second flexural hinge (250) comprises second flexural members (255a-c) which are pliable to enable the second flexural hinge to pivot; and
wherein the base portion (210), the first tray table portion, the first flexural hinge (240), the second tray table portion, and the second flexural hinge (250) are integrally formed;
**characterized in that** the first and second flexural members (245a-c; 255a-c) are shaped such that, when the first and second tray table portions are folded to stow the tray table, gaps are formed in between each flexural member, and, when the first and second tray table portions are unfolded to deploy the tray table, no gaps are formed between each flexural member.

2. The tray table according to claim 1, wherein each of the first flexural members (245a-c) and each the second flexural members (255a-c) have a rectangular-cuboid shape, and wherein the rectangular-cuboid shape has a length, a width, and a thickness, and wherein the length is at least 10 times longer than the width, and wherein the length is at least 10 times longer than the thickness.

3. The tray table according to claim 1 or 2, wherein each of the first tray table portion and the second tray table portion have a rectangular-cuboid shape, and wherein the rectangular-cuboid shape has a length, a width, and a thickness, wherein the length is at least 10 times longer than the thickness, wherein the width is at least 10 times longer than the thickness.

4. The tray table according to any preceding claim, wherein the tray table (200) comprises nylon polyamide (PA).

5. The tray table according to any preceding claim, further comprising circular material voids (260) formed proximal attached ends of each of the first flexural members (245a-c) and each the second flexural members (255a-c).

6. The tray table according to any preceding claim, wherein detached ends of each of the first flexural members (245a-c) and each of the second flexural members (255a-c) comprise fillet edges.

7. The tray table according to any preceding claim, wherein the first tray table portion is configured to fold against the second tray table portion to stow the tray table, and wherein the first and second tray table portions are coplanar in a deployed condition of the tray table (200).

8. The tray table according to any preceding claim, wherein the second tray table portion pivots about 180 degrees relative to the first tray table portion between the stowed and deployed conditions of the tray table, and the first tray table portion pivots about 90 degrees relative to the base portion (210) between the stowed and deployed conditions of the tray table (200).

9. A method of manufacturing a tray table (200) for an aircraft using an additive manufacturing process, the tray table comprising:
a base portion (210) attachable to an aircraft seat frame via a hinge, the hinge operative to pivot the base portion relative to the aircraft seat frame;
a first tray table portion;
a first flexural hinge (240) connecting the first tray table portion to the base portion, the first flexural hinge operative to pivot the first tray table portion relative to the base portion;
a second tray table portion; and
a second flexural hinge (250) connecting the second tray table portion to the first tray table portion, the second flexural hinge operative to pivot the second tray table portion relative to the first tray table portion;
wherein the first flexural hinge comprises first flexural members (245a-c) which are pliable to enable the first flexural hinge to pivot;
wherein the second flexural hinge comprises second flexural members (255a-c) which are pliable to enable the second flexural hinge to pivot; and
wherein the base portion, the first tray table portion, the first flexural hinge, the second tray table portion, and the second flexural hinge are integrally formed;
wherein the first and second flexural members are shaped such that, when the first and second tray table portions are folded to stow the tray table, gaps are formed in between each flexural member, and, when the first and second tray table portions are unfolded to deploy the tray table, no gaps are formed between each flexural member.

10. The method according to claim 9, wherein the additive manufacturing process comprises stereolithography (SLA).

11. The method according to claim 9 or 10, wherein each of the first flexural members and each of the second flexural members have a rectangular-cuboid shape having fillet edges, and wherein the substantially rectangular-cuboid shape has a length, a width, and a thickness, wherein the length is at least 10 times longer than the width, and wherein the length is at least 10 times longer than the thickness.

12. The method according to any of claims 9-11, wherein each of the first tray table portion and the second tray table portion have a rectangular cuboid shape, and wherein the rectangular-cuboid shape has a length, a width, and a thickness, wherein the length is at least 10 times longer than the thickness, wherein the width is at least 10 times longer than the thickness.

13. The method according to any of claims 9-12, further comprising circular material voids formed proximal attached ends of each of the first flexural members and each the second flexural members.

14. The method according to any of claims 9-13, wherein the first tray table portion is configured to fold against the second tray table portion to stow the tray table, and wherein the first and second tray table portions are coplanar in a deployed condition of the tray table.

15. The method according to any of claims 9-14, wherein the second tray table portion pivots about 180 degrees relative to the first tray table portion between the stowed and deployed conditions of the tray table, and the first tray table portion pivots about 90 degrees relative to the base portion between the stowed and deployed conditions of the tray table.

## Patentansprüche

1. Serviertisch (200) für ein Luftfahrzeug, umfassend:
einen Basisabschnitt (210), der über ein Scharnier an einem Luftfahrzeugsitzrahmen befestigbar ist, wobei das Scharnier dazu dient, den Basisabschnitt relativ zu dem Luftfahrzeugsitzrahmen zu schwenken;
einen ersten Serviertischabschnitt;
ein erstes Biegescharnier (240), das den ersten Serviertischabschnitt mit dem Basisabschnitt verbindet, wobei das erste Biegescharnier dazu dient, den ersten Serviertischabschnitt relativ zu dem Basisabschnitt zu schwenken;
einen zweiten Serviertischabschnitt; und
ein zweites Biegescharnier (250), das den zweiten Serviertischabschnitt mit dem ersten Serviertischabschnitt verbindet, wobei das zweite Biegescharnier dazu dient, den zweiten Serviertischabschnitt relativ zu dem ersten Serviertischabschnitt zu schwenken;
wobei das erste Biegescharnier (240) erste Biegeelemente (245a-c) umfasst, die flexibel sind, um ein Schwenken des ersten Biegescharniers zu ermöglichen;
wobei das zweite Biegescharnier (250) zweite Biegeelemente (255a-c) umfasst, die flexibel sind, um ein Schwenken des zweiten Biegescharniers zu ermöglichen; und
wobei der Basisabschnitt (210), der erste Serviertischabschnitt, das erste Biegescharnier (240), der zweite Serviertischabschnitt und das zweite Biegescharnier (250) einstückig ausgebildet sind;
**dadurch gekennzeichnet, dass** die ersten und die zweiten Biegeelemente (245a-c; 255a-c) derart geformt sind, dass, wenn der erste und der zweite Serviertischabschnitt eingeklappt sind, um den Serviertisch zu verstauen, Spalte zwischen jedem Biegeelement ausgebildet sind, und dass, wenn der erste und der zweite Serviertischabschnitt ausgeklappt sind, um den Serviertisch einzusetzen, keine Spalte zwischen jedem Biegeelement ausgebildet sind.

2. Serviertisch nach Anspruch 1, wobei jedes der ersten Biegeelemente (245a-c) und jedes der zweiten Biegeelemente (255a-c) eine rechteckig-kubische Form aufweist und wobei die rechteckig-kubische Form eine Länge, eine Breite und eine Dicke aufweist und wobei die Länge mindestens 10-mal länger als die Breite ist und wobei die Länge mindestens 10-mal länger als die Dicke ist.

3. Serviertisch nach Anspruch 1 oder 2, wobei jeder von dem ersten Serviertischabschnitt und dem zweiten Serviertischabschnitt eine rechteckig-kubische Form aufweist und wobei die rechteckig-kubische Form eine Länge, eine Breite und eine Dicke aufweist, wobei die Länge mindestens 10-mal länger als die Dicke ist, wobei die Breite mindestens 10-mal länger als die Dicke ist.

4. Serviertisch nach einem der vorhergehenden Ansprüche, wobei der Serviertisch (200) Nylon-Polyamid (PA) umfasst.

5. Serviertisch nach einem der vorhergehenden Ansprüche, ferner umfassend kreisförmige Materialhohlräume (260), die proximal zu befestigen Enden jedes der ersten Biegeelemente (245a-c) und jedes der zweiten Biegeelemente (255a-c) ausgebildet sind.

6. Serviertisch nach einem der vorhergehenden Ansprüche, wobei die gelösten Enden jedes der ersten Biegeelemente (245a-c) und jedes der zweiten Biegeelemente (255a-c) abgerundete Kanten aufweisen.

7. Serviertisch nach einem der vorhergehenden Ansprüche, wobei der erste Serviertischabschnitt dazu konfiguriert ist, gegen den zweiten Serviertischabschnitt geklappt zu werden, um den Serviertisch zu verstauen, und wobei der erste und der zweite Serviertischabschnitt in einem Einsatzzustand des Serviertisches (200) koplanar sind.

8. Serviertisch nach einem der vorhergehenden Ansprüche, wobei der zweite Serviertischabschnitt zwischen dem verstauten und dem Einsatzzustand des Serviertisches um etwa 180 Grad relativ zu dem ersten Serviertischabschnitt schwenkt und der erste Serviertischabschnitt zwischen dem verstauten und dem Einsatzzustand des Serviertisches (200) um etwa 90 Grad relativ zu dem Basisabschnitt (210) schwenkt.

9. Verfahren zum Herstellen eines Serviertisches (200) für ein Luftfahrzeug unter Verwendung eines additiven Herstellungsprozesses, wobei der Serviertisch Folgendes umfasst:
einen Basisabschnitt (210), der über ein Scharnier an einem Luftfahrzeugsitzrahmen befestigbar ist, wobei das Scharnier dazu dient, den Basisabschnitt relativ zu dem Luftfahrzeugsitzrahmen zu schwenken;
einen ersten Serviertischabschnitt;
ein erstes Biegescharnier (240), das den ersten Serviertischabschnitt mit dem Basisabschnitt verbindet, wobei das erste Biegescharnier dazu dient, den ersten Serviertischabschnitt relativ zu dem Basisabschnitt zu schwenken;
einen zweiten Serviertischabschnitt; und
ein zweites Biegescharnier (250), das den zweiten Serviertischabschnitt mit dem ersten Serviertischabschnitt verbindet, wobei das zweite Biegescharnier dazu dient, den zweiten Serviertischabschnitt relativ zu dem ersten Serviertischabschnitt zu schwenken;
wobei das erste Biegescharnier erste Biegeelemente (245a-c) umfasst, die flexibel sind, um ein Schwenken des ersten Biegescharniers zu ermöglichen;
wobei das zweite Biegescharnier zweite Biegeelemente (255a-c) umfasst, die flexibel sind, um ein Schwenken des zweiten Biegescharniers zu ermöglichen; und
wobei der Basisabschnitt, der erste Serviertischabschnitt, das erste Biegescharnier, der zweite Serviertischabschnitt und das zweite Biegescharnier einstückig ausgebildet sind;
wobei die ersten und die zweiten Biegeelemente derart geformt sind, dass, wenn der erste und der zweite Serviertischabschnitt eingeklappt sind, um den Serviertisch zu verstauen, Spalte zwischen jedem Biegeelement ausgebildet sind, und dass, wenn der erste und der zweite Serviertischabschnitt ausgeklappt sind, um den Serviertisch einzusetzen, keine Spalte zwischen jedem Biegeelement ausgebildet sind.

10. Verfahren nach Anspruch 9, wobei der additive Herstellungsprozess Stereolithografie (SLA) umfasst.

11. Verfahren nach Anspruch 9 oder 10, wobei jedes der ersten Biegeelemente und jedes der zweiten Biegeelemente eine rechteckig-kubische Form mit abgerundeten Kanten aufweist und wobei die im Wesentlichen rechteckig-kubische Form eine Länge, eine Breite und eine Dicke aufweist, wobei die Länge mindestens 10-mal länger als die Breite ist und wobei die Länge mindestens 10-mal länger als die Dicke ist.

12. Verfahren nach einem der Ansprüche 9-11, wobei jeder von dem ersten Serviertischabschnitt und dem zweiten Serviertischabschnitt eine rechteckig-kubische Form aufweist und wobei die rechteckig-kubische Form eine Länge, eine Breite und eine Dicke aufweist, wobei die Länge mindestens 10-mal länger als die Dicke ist, wobei die Breite mindestens 10-mal länger als die Dicke ist.

13. Verfahren nach einem der Ansprüche 9-12, ferner umfassend kreisförmige Materialhohlräume, die proximal zu befestigen Enden jedes der ersten Biegeelemente und jedes der zweiten Biegeelemente ausgebildet sind.

14. Verfahren nach einem der Ansprüche 9-13, wobei der erste Serviertischabschnitt dazu konfiguriert ist, gegen den zweiten Serviertischabschnitt geklappt zu werden, um den Serviertisch zu verstauen, und wobei der erste und der zweite Serviertischabschnitt in einem Einsatzzustand des Serviertisches koplanar sind.

15. Verfahren nach einem der Ansprüche 9-14, wobei der zweite Serviertischabschnitt zwischen dem verstauten und dem Einsatzzustand des Serviertisches um etwa 180 Grad relativ zu dem ersten Serviertischabschnitt schwenkt und der erste Serviertischabschnitt zwischen dem verstauten und dem Einsatzzustand des Serviertisches um etwa 90 Grad relativ zu dem Basisabschnitt schwenkt.

## Revendications

1. Table plateau (200) pour un aéronef, comprenant :
une partie de base (210) pouvant être fixée à un cadre de siège d'aéronef par l'intermédiaire d'une charnière, la charnière étant opérationnelle pour faire pivoter la partie de base par rapport au cadre de siège d'aéronef ;
une première partie de table plateau ;
une première charnière de flexion (240) reliant la première partie de table plateau à la partie de base, la première charnière de flexion étant opérationnelle pour faire pivoter la première partie de table plateau par rapport à la partie de base ;
une seconde partie de table plateau ; et
une seconde charnière de flexion (250) reliant la seconde partie de table plateau à la première partie de table plateau, la seconde charnière de flexion étant opérationnelle pour faire pivoter la seconde partie de table plateau par rapport à la première partie de table plateau ;
dans laquelle la première charnière de flexion (240) comprend des premiers éléments de flexion (245a-c) qui sont pliables pour permettre à la première charnière de flexion de pivoter ;
dans laquelle la seconde charnière de flexion (250) comprend des seconds éléments de flexion (255a-c) qui sont pliables pour permettre à la seconde charnière de flexion de pivoter ; et
dans laquelle la partie de base (210), la première partie de table plateau, la première charnière de flexion (240), la seconde partie de table plateau et la seconde charnière de flexion (250) sont formées d'un seul tenant ;
**caractérisée en ce que** les premier et second éléments de flexion (245a-c ; 255a-c) sont formés de telle sorte que, lorsque les première et seconde parties de table plateau sont repliées pour ranger la table plateau, des espaces sont formés entre chaque élément de flexion, et, lorsque les première et seconde parties de table plateau sont dépliées pour déployer la table plateau, aucun espace n'est formé entre chaque élément de flexion.

2. Table plateau selon la revendication 1, dans laquelle chacun des premiers éléments de flexion (245a-c) et chacun des seconds éléments de flexion (255a-c) ont une forme rectangulaire-cuboïde, et dans laquelle la forme rectangulaire-cuboïde a une longueur, une largeur et une épaisseur, et dans laquelle la longueur est au moins 10 fois plus longue que la largeur, et dans laquelle la longueur est au moins 10 fois plus longue que l'épaisseur.

3. Table plateau selon la revendication 1 ou 2, dans laquelle chacune de la première partie de table plateau et de la seconde partie de table plateau ont une forme rectangulaire-cuboïde, et dans laquelle la forme rectangulaire-cuboïde a une longueur, une largeur et une épaisseur, dans laquelle la longueur est au moins 10 fois plus longue que l'épaisseur, dans laquelle la largeur est au moins 10 fois plus longue que l'épaisseur.

4. Table plateau selon une quelconque revendication précédente, dans laquelle la table plateau (200) comprend du nylon polyamide (PA).

5. Table plateau selon une quelconque revendication précédente, comprenant également des vides de matériau circulaires (260) formés à proximité d'extrémités attachées de chacun des premiers éléments de flexion (245a-c) et de chacun des seconds éléments de flexion (255a-c).

6. Table plateau selon une quelconque revendication précédente, dans laquelle les extrémités détachées de chacun des premiers éléments de flexion (245a-c) et de chacun des seconds éléments de flexion (255a-c) comprennent des bords de congé.

7. Table plateau selon une quelconque revendication précédente, dans laquelle la première partie de table plateau est configurée pour se replier contre la seconde partie de table plateau pour ranger la table plateau, et dans laquelle les première et seconde parties de table plateau sont coplanaires dans une condition déployée de la table plateau (200).

8. Table plateau selon une quelconque revendication précédente, dans laquelle la seconde partie de table plateau pivote d'environ 180 degrés par rapport à la première partie de table plateau entre les conditions rangée et déployée de la table plateau, et la première partie de table plateau pivote d'environ 90 degrés par rapport à la partie de base (210) entre les conditions rangée et déployée de la table plateau (200).

9. Procédé de fabrication d'une table plateau (200) pour un aéronef utilisant un processus de fabrication additive, la table plateau comprenant :
une partie de base (210) pouvant être fixée à un cadre de siège d'aéronef par l'intermédiaire d'une charnière, la charnière étant opérationnelle pour faire pivoter la partie de base par rapport au cadre de siège d'aéronef ;
une première partie de table plateau ;
une première charnière de flexion (240) reliant la première partie de table plateau à la partie de base, la première charnière de flexion étant opérationnelle pour faire pivoter la première partie de table plateau par rapport à la partie de base ;
une seconde partie de table plateau ; et
une seconde charnière de flexion (250) reliant la seconde partie de table plateau à la première partie de table plateau, la seconde charnière de flexion étant opérationnelle pour faire pivoter la seconde partie de table plateau par rapport à la première partie de table plateau ;
dans lequel la première charnière de flexion comprend des premiers éléments de flexion (245a-c) qui sont pliables pour permettre à la première charnière de flexion de pivoter ;
dans lequel la seconde charnière de flexion comprend des seconds éléments de flexion (255a-c) qui sont pliables pour permettre à la seconde charnière de flexion de pivoter ; et
dans lequel la partie de base, la première partie de table plateau, la première charnière de flexion, la seconde partie de table plateau et la seconde charnière de flexion sont formées d'un seul tenant ;
dans lequel les premier et second éléments de flexion sont formés de telle sorte que, lorsque les première et seconde parties de table plateau sont repliées pour ranger la table plateau, des espaces sont formés entre chaque élément de flexion, et, lorsque les première et seconde parties de table plateau sont dépliées pour déployer la table plateau, aucun espace n'est formé entre chaque élément de flexion.

10. Procédé selon la revendication 9, dans lequel le processus de fabrication additive comprend la stéréolithographie (SLA).

11. Procédé selon la revendication 9 ou 10, dans lequel chacun des premiers éléments de flexion et chacun des seconds éléments de flexion ont une forme rectangulaire-cuboïde ayant des bords de congé, et dans lequel la forme sensiblement rectangulaire-cuboïde a une longueur, une largeur et une épaisseur, dans lequel la longueur est au moins 10 fois plus longue que la largeur, et dans lequel la longueur est au moins 10 fois plus longue que l'épaisseur.

12. Procédé selon l'une quelconque des revendications 9 à 11, dans lequel chacune de la première partie de table plateau et de la seconde partie de table plateau ont une forme rectangulaire-cuboïde, et dans lequel la forme rectangulaire-cuboïde a une longueur, une largeur et une épaisseur, dans lequel la longueur est au moins 10 fois plus longue que l'épaisseur, dans lequel la largeur est au moins 10 fois plus longue que l'épaisseur.

13. Procédé selon l'une quelconque des revendications 9 à 12, comprenant également des vides de matériau circulaires formés à proximité d'extrémités attachées de chacun des premiers éléments de flexion et de chacun des seconds éléments de flexion.

14. Procédé selon l'une quelconque des revendications 9 à 13, dans lequel la première partie de table plateau est configurée pour se replier contre la seconde partie de table plateau pour ranger la table plateau, et dans lequel les première et seconde parties de table plateau sont coplanaires dans une condition déployée de la table plateau.

15. Procédé selon l'une quelconque des revendications 9 à 14, dans lequel la seconde partie de table plateau pivote d'environ 180 degrés par rapport à la première partie de table plateau entre les conditions rangée et déployée de la table plateau, et la première partie de table plateau pivote d'environ 90 degrés par rapport à la partie de base entre les conditions rangée et déployée de la table plateau.
